(19) Europäisches Patentamt / European Patent Office / Office européen des brevets

(11) EP 4 480 979 A1

(12) **EUROPEAN PATENT APPLICATION**

(43) Date of publication:
**25.12.2024 Bulletin 2024/52**

(21) Application number: **23180300.8**

(22) Date of filing: **20.06.2023**

(51) International Patent Classification (IPC):
***C08G 18/24*** (2006.01) ***C08G 18/62*** (2006.01)
***C08G 18/75*** (2006.01) ***C08G 18/77*** (2006.01)
***C08G 18/79*** (2006.01) ***C08L 75/14*** (2006.01)
***C08L 75/16*** (2006.01) ***C09D 175/14*** (2006.01)
***C09D 175/16*** (2006.01)

(52) Cooperative Patent Classification (CPC):
**C08G 18/246; C08G 18/6254; C08G 18/753; C08G 18/771; C08G 18/792; C08L 75/14; C08L 75/16; C09D 175/14; C09D 175/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Covestro Deutschland AG**
**51373 Leverkusen (DE)**

(72) Inventors:
- **Latorre Martinez, Irene Cristina**
  **51373 Leverkusen (DE)**
- **Pires, Raul**
  **50670 Köln (DE)**
- **Richter, Frank**
  **51373 Leverkusen (DE)**
- **Darmandeh, Heidar**
  **40597 Düsseldorf (DE)**
- **Woods, Laura**
  **40597 Düsseldorf (DE)**
- **Meyer, Achim**
  **51379 Leverkusen (DE)**
- **Thiering, Steven**
  **51375 Leverkusen (DE)**

(74) Representative: **Levpat**
**c/o Covestro AG**
**Gebäude K12**
**51365 Leverkusen (DE)**

(54) **POLYISOCYANATE COMPOSITION**

(57) The present invention relates to a polyisocyanate composition comprising at least one bridging cis-tetrahydrofuran-2,5-diyl-dimethylene unit and at least one isocyanurate, iminooxadiazinedione, allophanate, urethane, urea, uretdione, oxadiazinetrione, carbodiimide, thiourethane, thioallophanate and/or biuret structure and/or comprising at least one bridging trans-tetrahydrofuran-2,5-diyl)-dimethylene unit and at least one isocyanurate, iminooxadiazinedione, allophanate, urethane, urea, uretdione, oxadiazinetrione, carbodiimide, thiourethane, thioallophanate and/or biuret structure. The invention further relates to a process for preparing such polyisocyanate composition, a use of such polyisocyanates compositions as well as shaped bodies or coatings.

EP 4 480 979 A1

## Description

The invention relates to a polyisocyanate composition. The invention further relates to a process for preparing such polyisocyanate composition, to a use of such polyisocyanate composition, to a two-component system comprising the polyisocyanate composition and to the shaped bodies, coatings and composite parts that can be obtained therewith.

The oligomerization or polymerization of isocyanates, especially to form higher molecular weight oligomer mixtures has long been known. The reaction of a relatively small number of isocyanates with one another is referred to as oligomerization. The reaction of a relatively large number of isocyanates is referred to as polymerization. In the context of the present invention, the oligomerization or polymerization of isocyanates described above is referred to collectively as isocyanate modification or modification of isocyanates. All products resulting from such processes are referred to collectively in the present document as polyisocyanates composition or also polyisocyanates for short. The polyisocyanates contain free isocyanate groups, NCO groups for short, which optionally may also have been temporarily deactivated with blocking agents, they are exceptionally high-quality starting materials for the preparation of a multiplicity of polyurethane plastics and coating compositions.

Polyisocyanates employed in coating compositions for high-quality coatings are, in particular, low-monomer derivatives prepared from hexamethylene 1,6-diisocyanate (HDI). Particularly suitable for elastic, highly robust coatings for this purpose are isocyanurate polyisocyanates of HDI, or HDI polyisocyanates containing iminooxadiazinedione and isocyanurate structures, as are described for example in H. J. Laas, R. Halpaap, J. Pedain, J. prakt. Chem. 1994, 336, 185-200. These polyisocyanates generally have isocyanate functionalities ($F_{NCO}$) of 3 or more, where isocyanate functionality refers to the average number of NCO groups per molecule.

The disadvantage of HDI based polyisocyanates is that the physical drying time is rather long, making the coating process less efficient and at least for lower temperatures catalysts mandatory. Similar to HDI, pentamethylene 1,5-diisocyanate (PDI) is an established monomer, as described for example by W. Siefken, Liebigs Ann. Chem. 1949, 562, page 122 or in DE 1493360 B1 and DE 1900514 A1.

GB936370 describes a generic lab synthesis of monomeric isocyanates of furane and tetrahydrofurane by liquid phase phosgenation of the dihydrochloride salt, which is a rather inefficient and complex process on a larger scale. No further modification or application tests are described.

WO2011/098272A2 describes mixtures of short-chain renewable diisocyanates with long-chain renewable diisocyanates for preparation of a polyurethane. Among the very long list of short-chain renewable diisocyanates furan based diisocyanates are generally mentioned, but neither application examples nor preferences are described.

WO2021/180709A1 describes specific open-chain isocyanates containing ether groups for being used in isocyanate modification with the aim to reduce catalyst dosage in the isocyanate modification reaction itself, which is completely different from catalyst technology in coating applications. No application examples are described.

In contrast to the beforementioned monomeric furane and tetrahydrofurane and other open-chain diisocyanates containing ether groups, isophorone diisocyanate (IPDI) has been used for coating applications and is known for its good drying properties resulting in shorter drying time. A drawback of IPDI polyisocyanates, however, is the inadequate flexibility and reduced solvent resistance of the obtained coatings as well as its low chemical reactivity.

WO2020/109125A1 describes a polyisocyanate mixture of mainly PDI and IPDI which show improved properties compared to HDI and IPDI mixtures. However, also these PDI/IPDI polyisocyanates mixtures require more effort to prepare and even its properties leave room for improvement.

In summary, there was still no solution available for solving the prior art disadvantages.

Thus, it was an object of the present invention to provide a polyisocyanate composition combining fast drying times of the prepared coating compositions with excellent solvent resistance of the obtained coatings without the need to mix polyisocyanates from different monomeric diisocyanates and which allows curing without the addition of a catalyst for the coating application even at low temperatures.

This object has been achieved by a polyisocyanate composition comprising at least one bridging cis-tetrahydrofuran-2,5-diyl-dimethylene unit and at least one isocyanurate, iminooxadiazinedione, allophanate, urethane, urea, uretdione, oxadiazinetrione, carbodiimide, thiourethane, thioallophanate and/or biuret structure and/or comprising at least one bridging trans-tetrahydrofuran-2,5-diyl)-dimethylene unit and at least one isocyanurate, iminooxadiazinedione, allophanate, urethane, urea, uretdione, oxadiazinetrione, carbodiimide, thiourethane, thioallophanate and/or biuret structure.

The references to "comprising", "containing", etc. preferably denote "substantially consisting of" and very particularly preferably denote "consisting of".

In the present invention, any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

According to this invention, the cis and trans stereoisomers of (tetrahydrofuran-2-5-diyl)-dimethaneamine are

jointly referred to as "TEFUDA" and each individually also referred to as "cis-TEFUDA" and "trans-TEFUDA". The cis and trans stereoisomers of 2,5-bis(isocyanatomethyl) tetrahydrofurane are jointly referred to as "TEFUDI" and each individually also referred to as "cis-TEFUDI" and "trans-TEFUDI". For sake of clarity, cis-TEFUDA or cis-TEFUDI correspond to the (2R,5S) and (2S,5R) configuration and trans-TEFUDA or trans-TEFUDI correspond to the (2R,5R) and (2S,5S) configuration.

According to this invention, the bridging cis- and/or trans-tetrahydrofuran-2,5-diyl-dimethylene units are structural units which are connected via one exocyclic CHz-moiety to the nitrogen atom of an isocyanate group, to the nitrogen atom of an isocyanurate group, to the nitrogen atom of an iminooxadiazindione group, to the nitrogen atom of an allophanate group, to the nitrogen atom of an urethane group, to the nitrogen atom of an uretdione group, to the nitrogen atom of an oxadiazinetrione group, to the nitrogen atom of a carbodiimide group, to the nitrogen atom of a thiourethane group, to the nitrogen atom of a thioallophanate group or to the nitrogen atom of a biuret group and which are connected via the other exocyclic CHz-moiety to the nitrogen atom of independently selected any of the before mentioned functional groups. The designation of the two exocyclic $CH_2$-moieties may also be switched. This bridging unit can be detected via standard $^{1}$Hand/or $^{13}$C-NMR measurements.

Isocyanurate structures or isocyanurate groups are understood as structural units, linked randomly to each other or functional groups in accordance with the oligomeric distribution via the above-described cis- and/or trans-tetrahydrofuran-2,5-diyl)-dimethylene units.

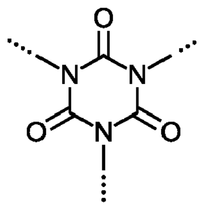

Isocyanurate structure

Iminooxadiazindione structures (also referred to as iminooxadiazindione groups) are understood as structural units, linked randomly to each other or functional groups in accordance with the oligomeric distribution via the above-described cis- and/or trans-tetrahydrofuran-2,5-diyl)-dimethylene units.

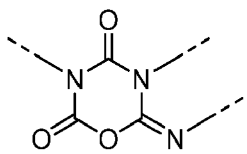

Iminooxadiazindione structure

Allophanate structures (also referred to as allophanate groups) are understood as units, linked randomly to each other or functional groups in accordance with the oligomeric distribution via the above-described cis- and/or trans-tetrahydrofuran-2,5-diyl)-dimethylene units.

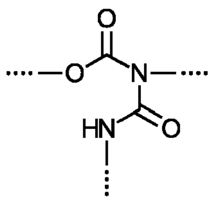

Allophanate structure

The existence of the beforementioned isocyanurate, iminooxadiazindione and/or allophanate structures can be determined by standard $^{1}$H- and/or $^{13}$C-NMR measurements.

In a first preferred embodiment, the inventive polyisocyanate composition is characterized in that it comprises at least one isocyanurate, iminooxadiazinedione, allophanate, uretdione and/or biuret structure, preferably at least one isocyanurate, iminooxadiazinedione, allophanate, and/or uretdione structure, more preferably at least one isocyanurate, iminooxadiazinedione and/or allophanate structure. This has the advantage that the curing speed of the applied coating can be further increased.

In a preferred embodiment, the inventive polyisocyanate composition is characterized in that it has an NCO content determined in accordance with DIN EN ISO 11909:2007-05 of from 5.8 to 25.9% by weight, preferably from 7.8 to 24.9% by weight, particularly preferably from 9.7 to 23.9% by weight, based on the total weight of the polyisocyanate

composition.

In a preferred embodiment, the inventive polyisocyanate composition is characterized in that it has a residual monomeric 2,5-bis(isocyanatomethyl) tetrahydrofurane content of less than 1 % by weight, preferably less than 0.5 % by weight and more preferably less than 0.1 % by weight, based on the total weight of the polyisocyanate composition.

The residual monomeric 2,5-bis(isocyanatomethyl) tetrahydrofurane content is determined by gas chromatography in accordance with DIN EN ISO 10283:2007-11 with internal standard.

In a preferred embodiment the inventive polyisocyanate composition comprises, based on the total solid content of the inventive polyisocyanate composition, ≥ 70 % by weight, preferably ≥ 85 % by weight, more preferably ≥ 95 % by weight, and very preferably 100 % by weight of the polyisocyanates comprising at least one bridging cis-tetrahydrofuran-2,5-diyl-dimethylene unit and at least one isocyanurate, iminooxadiazinedione, allophanate, urethane, urea, uretdione, oxadiazinetrione, carbodiimide, thiourethane, thioallophanate and/or biuret structure and/or comprising at least one bridging trans-tetrahydrofuran-2,5-diyl)-dimethylene unit and at least one isocyanurate, iminooxadiazinedione, allophanate, urethane, urea, uretdione, oxadiazinetrione, carbodiimide, thiourethane, thioallophanate and/or biuret structure.

It is further preferred that the inventive polyisocyanate composition comprises, based on the total solid content of the inventive polyisocyanate composition, ≥ 70 wt%, preferably ≥ 85 wt%, more preferably ≥ 95 wt%, and very preferably ≥ 100 wt% of the polyisocyanates comprising at least one bridging cis-tetrahydrofuran-2,5-diyl-dimethylene unit and at least one isocyanurate, iminooxadiazinedione and/or allophanate structure and/or comprising at least one bridging trans-tetrahydrofuran-2,5-diyl)-dimethylene unit and at least one isocyanurate, iminooxadiazinedione and/or allophanate structure.

Optionally, the inventive polyisocyanate composition may comprise further bridging units derived from other monomeric diisocyanates, for example from pentamethylene diisocyanate (PDI), hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI), 1,3- and 1,4-bis(isocyanatomethyl)cyclohexane ($H_6$XDI), tolylene 2,4- and 2,6-diisocyanate (TDI), bis(4-isocyanatophenyl)methane (4,4'MDI), 4-isocyanatophenyl-2-isocyanatophenylmethane (2,4'MDI) and polycyclic products obtainable by formaldehyde-aniline polycondensation and subsequent conversion of the resulting (poly)amines to the corresponding (poly)isocyanates (polymer MDI).

In case other monomeric diisocyanates are used or comprised as bridging units, preference is given to pentamethylene diisocyanate (PDI), hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI) and/or 1,3- and 1,4-bis(isocyanatomethyl)cyclohexane ($H_6$XDI). Particular preference is given to pentamethylene diisocyanate (PDI), hexamethylene diisocyanate (HDI), 2,4,4-trimethylhexane 1,6-diisocyanate, 2,2,4-trimethylhexane 1,6-diisocyanate, 4-isocyanatomethyloctane and/or 1,8-diisocyanate and even more preference is given to pentamethylene diisocyanate (PDI) and/or hexamethylene diisocyanate (HDI).

The amount of the optional further isocyanates different from the essential cis-2,5-bis(isocyanatomethyl) tetrahydrofurane and/or trans-2,5-bis(isocyanatomethyl) tetrahydrofurane is guided by the specific application and, if they are used at all, may vary within wide limits, preferably between 0 and 5 % by weight, preferably between 0 and 2 % by weight, more preferably between 0 and 1 % by weight, based on the total amount of monomeric compounds that have NCO groups. It is however most preferred that only cis-2,5-bis(isocyanatomethyl) tetrahydrofurane and/or trans-2,5-bis(isocyanatomethyl) tetrahydrofurane are the bridging units in the inventive polyisocyanate composition to maximize the positive technical effect of the essential TEFUDI.

It is irrelevant by which processes the abovementioned isocyanates, including the cis-2,5-bis(isocyanatomethyl) tetrahydrofurane and/or trans-2,5-bis(isocyanatomethyl) tetrahydrofurane are generated, i.e. with or without use of phosgene. Preferred in the industrial production of the isocyanates is the phosgenation in the liquid-phase or the gas-phase and even more preferred by gas-phase phosgenation as described for example in EP 0 764 633 A2. The TEFUDI is preferably prepared from the respective diamines.

The invention further relates to a process for preparing a polyisocyanate, comprising a conversion step of 2,5-bis(isocyanatomethyl) tetrahydrofurane to the polyisocyanate and a polyisocyanate, obtained or obtainable, preferably directly obtained, according to the process of converting 2,5-bis(isocyanatomethyl) tetrahydrofurane to the polyisocyanate.

The precursor for the essential cis-2,5-bis(isocyanatomethyl) tetrahydrofurane and/or trans-2,5-bis(isocyanatomethyl) tetrahydrofurane can be obtained from different sources but is preferably from a biobased source.

In case other monomeric diisocyanates are used or comprised as bridging units, the content of the total sum of monomeric diisocyanates, including the 2,5-bis(isocyanatomethyl) tetrahydrofurane, is preferably less than 1 % by weight, preferably less than 0.5 % by weight and more preferably less than 0.1 % by weight, based on the total weight of the polyisocyanate composition. The residual monomeric diisocyanate content is determined by gas chromatography in

accordance with DIN EN ISO 10283:2007-11 with internal standard.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The invention further relates to a process for preparing the inventive polyisocyanate composition, comprising the reaction of at least one cis-2,5-bis(isocyanatomethyl) tetrahydrofurane and/or trans-2,5-bis(isocyanatomethyl) tetrahydrofurane, optionally in the presence of further coreactants selected from the group of alcohols, thiols, amines, water, CO2, or else further isocyanates having an NCO functionality > 1.

In general, the cis-2,5-bis(isocyanatomethyl) tetrahydrofurane and/or trans-2,5-bis(isocyanatomethyl) tetrahydrofurane monomers are used in the inventive process to obtain the inventive polyisocyanate composition by forming the bridging units between isocyanurate, iminooxadiazinedione, allophanate, urethane, urea, uretdione, oxadiazinetrione, carbodiimide, thiourethane, thioallophanate and/or biuret structures. Such a modification of TEFUDI can be done according to methods for example described in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 or in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836.

Coreactants optionally used for the inventive process and optionally most likely contained in reacted form in the inventive polyisocyanate composition, in addition to the cis-2,5-bis(isocyanatomethyl) tetrahydrofurane and/or trans-2,5-bis(isocyanatomethyl) tetrahydrofurane themselves, may be the usually difunctional and higher-functionality coreactants having Zerevitinoff-active hydrogen that are customary in polyurethane chemistry, for example water, alcohols, thiols and amines. These compounds preferably have an average OH, NH or SH functionality of at least 1.5. These may, for example, be low molecular weight diols (e.g. ethane-1,2-diol, propane-1,3- or -1,2-diol, butane-1,4-diol), triols (e.g. glycerol, trimethylolpropane) and tetraols (e.g. pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols, polyacrylate polyols and/or polymethacrylate polyols, and the copolymers thereof.

The optionally comprised further isocyanates having an NCO functionality > 1 in the inventive process are preferably selected from the abovementioned lists. It is however most preferred that only TEFUDI is used as monomeric diisocyanate having an NCO functionality > 1.

As catalysts to be optionally used for the NCO-NCO reactions, e.g. to form the isocyanurate, iminooxadiazindione and/or allophanate structures from at least cis-2,5-bis(isocyanatomethyl) tetrahydrofurane and/or trans-2,5-bis(isocyanatomethyl) tetrahydrofurane, the typical compounds known to be catalytically active to isocyanates are suitable. These catalysts include, in addition to compounds of ionic structure for example with "onium" cations (ammonium, phosphonium, etc.) and nucleophilic anions such as hydroxide, alkanoate, carboxylate, heterocycles having at least one negatively charged nitrogen atom in the ring, especially azolate, imidazolate, triazolate, tetrazolate, fluoride, hydrogendifluoride, higher polyfluorides or mixtures of these (adducts of more than one equivalent of HF onto compounds containing fluoride ions), it being possible for the fluorides, hydrogendifluorides and higher polyfluorides to lead under suitable reaction conditions to products having a higher iminooxadiazinedione group content, also neutral bases such as tertiary amines or phosphanes (phosphines). Especially in the latter case structural variation makes it possible to cover a wide selectivity range; from high uretdione selectivity through to high "trimer" selectivity, the latter typically resulting in mixtures of isocyanurates and iminooxadiazinediones.

The optional catalysts may be used individually or in any desired mixtures with one another. For instance, the solutions of quaternary ammonium hydroxides in various alcohols, depending on the $pK_a$ value of the base and of the alcohol used, are present partially or completely as ammonium salts with alkoxide anion. This equilibrium can be shifted wholly to the side of complete alkoxide formation by removing the water of reaction resulting from this reaction. Suitable methods for water removal here are all methods known from the literature for this purpose, in particular (azeotropic) distillation, this optionally being with the aid of a suitable entrainer if the alcohol used as solvent is not suitable as such.

The progress of the reaction in the process of the invention can be monitored by determining the NCO content by titrimetric means as per DIN EN ISO 11909:2007-05. On attainment of the desired NCO content ("degree of polymerization") the reaction is stopped by suitable means depending on the modification reaction and/or the use of a catalyst or not. Preferably catalysts are deactivated by addition of suitable catalyst poisons.

According to a further preferred embodiment, the reaction is taken to a point where the reaction mixture has a degree of oligomerization of 10% to 40%, preferably of 15% to 30%.

"Degree of oligomerization" presently refers to the percentage of the isocyanate groups originally present in the starting mixture that is consumed during the reaction according to the invention. The degree of oligomerization in percent can be calculated according to the following formula:

$$\text{Degree of oligomerization} = (\text{NCO start} - \text{NCO end}) / \text{NCO start} \times 100.$$

The reaction can be discontinued, for example, when the target degree of oligomerization has been reached. This degree of oligomerization is reached generally after a reaction time of 30 minutes to 8 hours, preferably of 1 to 6 hours.

The reaction may be terminated for example by cooling of the reaction mixture to room temperature. In general, however, the reaction is ended by addition of a catalyst poison and optional subsequent brief heating of the reaction mixture to a temperature above 80°C, for example.

Examples of suitable catalyst poisons are inorganic acids such as hydrochloric acid, phosphorous acid or phosphoric acid, acyl chlorides such as acetyl chloride, benzoyl chloride or isophthaloyl dichloride, sulfonic acids and sulfonic esters, such as methanesulfonic acid, p-toluenesulfonic acid, trifluoromethanesulfonic acid, perfluorobutanesulfonic acid, dodecylbenzenesulfonic acid, methyl and ethyl p-toluenesulfonates, monoalkyl and dialkyl phosphates such as monotridecyl phosphate, dibutyl phosphate, and dioctyl phosphate, and also silylated acids, such as trimethylsilyl methanesulfonate, trimethylsilyl trifluoromethanesulfonate, tris(trimethylsilyl) phosphate, and diethyl trimethylsilyl phosphate.

The amount of catalyst poison needed to end the reaction is dependent here on the amount of catalyst used; in general, an equivalent amount of the catalyst poison is used, based on the catalyst used at the start. Taking account, though, losses of catalyst possibly occurring during the reaction, 20 to 80 equivalent% of the catalyst poison, based on the amount of catalyst originally used, may also be sufficient to end the reaction.

The stated catalyst poisons may be used either as they are or else in solution in a suitable solvent. If a solvent is employed for dissolving the catalyst poison, preference is given to TEFUDI. The degree of dilution may be selected freely within a very wide range; for example, suitability is possessed by solutions starting from a concentration of ≥ 25 % by weight, preferably ≥ 10 % by weight.

After the end of reaction, the reaction mixture is freed from volatile constituents (excess monomeric isocyanate components and any solvents additionally used) preferably by thin-film distillation under reduced pressure, as for example at a pressure of below 1.0 mbar, preferably below 0.75 mbar, more preferably below 0.25 mbar, under extremely gentle conditions, as for example at a temperature of 100 to 200°C, preferably of 120 to 180°C.

In another embodiment of the process of the invention, the stated volatile constituents are removed by extraction with suitable solvents that are inert toward isocyanate groups, examples being aliphatic or cycloaliphatic hydrocarbons such as pentane, hexane, heptane, cyclopentane or cyclohexane, from the polyisocyanate composition of the invention.

The process of the invention is preferably conducted without solvent. If desired, however, suitable solvents inert toward the reactive groups of the starting components can also be used. Suitable solvents are, for example, the customary paint solvents that are known per se such as ethyl acetate, butyl acetate, ethylene glycol monomethyl or monoethyl ether acetate, 1-methoxyprop-2-yl acetate, 3-methoxy-n-butyl acetate, acetone, 2-butanone, 4-methyl-2-pentanone, cyclohexanone, toluene, xylene, chlorobenzene, white spirit, more highly substituted aromatics, of the kind available commercially, for example, under the names Solventnaphtha, Solvesso®, Isopar®, Nappar®, Varsol® (ExxonMobil Chemical Central Europe, Cologne, Germany) and Shellsol® (Shell Deutschland Oil GmbH, Hamburg, Germany), and also solvents such as propylene glycol diacetate, diethylene glycol dimethyl ether, dipropylene glycol dimethyl ether, diethylene glycol ethyl and butyl ether acetate, N-methylpyrrolidone and N-methylcaprolactam, or any desired mixtures of such solvents.

Independent of the optional use of a solvent during the modification reaction of TEFUDI to form the bridging units, the inventive process comprises the optional step of addition of at least one solvent inert towards isocyanate groups to reach a preferred viscosity of < 2000 mPas at 23 °C measured to DIN EN ISO 3219: 1994-10. Such optional solvent is preferably selected from the beforementioned list. In case such an optional step is conducted, a suitable solvent is preferably added in an amount to achieve a solids content of > 50 % by weight, more preferably a solids content of > 80 % by weight and most preferred a solids content of > 95 % by weight.

Another aspect of the present invention is a polyisocyanate based on cis-2,5-bis(isocyanatomethyl) tetrahydrofurane and/or trans-2,5-bis(isocyanatomethyl) tetrahydrofurane, obtainable or directly obtained by oligomerization of cis-2,5-bis(isocyanatomethyl) tetrahydrofurane and/or trans-2,5-bis(isocyanatomethyl) tetrahydrofurane.

As an alternative or even further preferred embodiment also polyisocyanates mixtures of the inventive polyisocyanates composition with at least one other polyisocyanate are another aspect of the present invention. Such inventive polyisocyanate mixtures exhibit the same positive technical effects, because of the inventive polyisocyanates composition based on TEFUDI, with the additional benefit to further improve specific properties depending on and required by the desired application.

Suitable at least one other polyisocyanates are in general all kinds of polyisocyanates prepared by modification of simple aliphatic, cycloaliphatic, araliphatic and/or aromatic diisocyanates and/or triisocyanates, for example those of the above-mentioned type, with uretdione, isocyanurate, allophanate, biuret, iminooxadiazinedione and/or oxadiazine trione structure, such as those used and described for example in J. Prakt. Chem. 336 (1994) 185 - 200, in DE-A 1,670,666, DE-A 1,954,093, DE-A 2,414,413, DE-A 2,452,532, DE-A 2,641,380, DE-A 3,700,209, DE-A 3,900,053 and DE-A 3,928,503 or

in EP-A 0,336,205, EP-A 0,339,396 EP-A 0,798,299, EP-A 0,962,454, EP-A 0,962,455, EP-A 2,785,760, EP-A 2,883,895, EP-A 3,107,922, EP-A 3,107,948 and EP-A 3,337,836. They also can be used in mixtures of two or more of such polyisocyanates.

In principle, the inventive polyisocyanate mixture can be produced by mixing the at least one inventive polyisocyanate composition based on TEFUDI with the at least one polyisocyanates mentioned above. If desired, it is also possible to add one or more organic solvents which is inert towards isocyanate groups at any stage in or after the mixing process or even as a diluent already to the inventive polyisocyanates composition and/or to at least one of the other polyisocyanates. Suitable organic solvents which is inert towards isocyanate groups can be selected from the above-mentioned list of optional solvents for the preparation of the inventive polyisocyanates composition.

Regarding the residual monomeric content, the same limitations do preferably apply for the inventive polyisocyanate mixture, in which the total amount of residual monomeric diisocyanates and triisocyanates is less than 1 % by weight, preferably less than 0.5 % by weight and more preferably less than 0.1 % by weight, based on the total weight of the polyisocyanate composition. The residual monomeric content is determined by gas chromatography in accordance with DIN EN ISO 10283:2007-11 with internal standard.

The mixing ratio and thus the weight ratio of the at least one inventive polyisocyanates composition based on TEFUDI with the at least one polyisocyanates mentioned above can be varied over a large range and is selected based on the desired application. It is however preferred that the polyisocyanate composition based on TEFUDI is one of the main components, preferably more than 10 % by weight, more preferably more than 25 % by weight and most preferred more than 40% by weight of the solid content of the inventive polyisocyanates mixture.

By choosing the amount of solvent, the solids content of the polyisocyanate composition according to the invention or the inventive polyisocyanates mixture can be varied within wide limits in the case of the possible use of organic solvents. In this case, it is especially preferred if the polyisocyanate composition according to the invention or the inventive polyisocyanates mixture has a solids content of ≥ 10 and ≤ 95 % by weight, preferably ≥ 25 and ≤ 85 % by weight.

The invention further relates to a use of at least one inventive polyisocyanate composition and/or at least one polyisocyanate composition obtained or obtainable, preferably directly obtained according to the inventive process and/or at least one inventive polyisocyanate for reducing catalyst amounts in the curing with at least one NCO-reactive compound and/or for allowing curing with at least one NCO-reactive compound at temperatures below 100 °C, preferably below 80 °C.

NCO-reactive compounds used may be all compounds known to those skilled in the art - including in any desired mixtures with one another - that have an average OH, NH or SH functionality of at least 1.5. These may, for example, be low molecular weight diols (e.g. ethane-1,2-diol, propane-1,3- or -1,2-diol, butane-1,4-diol), triols (e.g. glycerol, trimethylolpropane) and tetraols (e.g. pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols, polyacrylate polyols and/or polymethacrylate polyols, and the copolymers thereof, called polyacrylate polyols hereinafter.

According to a further preferred embodiment, the NCO-reactive compound is a polyhydroxy compound, preferably a polyether polyol, polyester polyol, polycarbonate polyol or polyacrylate polyol.

The invention further relates to a use of at least one inventive polyisocyanate composition and/or at least one polyisocyanate composition obtained or obtainable, preferably directly obtained according to the inventive process and/or at least one inventive polyisocyanate for producing a coating on a substrate, an adhesive or a sealant.

The invention further relates to a two-component system containing a component A), comprising at least one inventive polyisocyanate composition and/or at least one polyisocyanate composition obtained or obtainable according to the inventive process and/or at least one inventive polyisocyanate, and a component B), comprising at least one NCO-reactive compound.

NCO-reactive compounds of component B) used may be all compounds known to those skilled in the art - including in any desired mixtures with one another - that have an average OH, NH or SH functionality of at least 1.5. These may, for example, be low molecular weight diols (e.g. ethane-1,2-diol, propane-1,3- or -1,2-diol, butane-1,4-diol), triols (e.g. glycerol, trimethylolpropane) and tetraols (e.g. pentaerythritol), short-chain polyamines, but also polyaspartic esters, polythiols and/or polyhydroxy compounds such as polyether polyols, polyester polyols, polyurethane polyols, polysiloxane polyols, polycarbonate polyols, polyether polyamines, polybutadiene polyols, polyacrylate polyols and/or polymethacrylate polyols, and the copolymers thereof, called polyacrylate polyols hereinafter.

In a preferred embodiment of the inventive two-component system the at least one NCO-reactive compound is a polyhydroxy compound, preferably a polyether polyol, polyester polyol, polycarbonate polyol and/or polyacrylate polyol.

The inventive two-component system optionally contains auxiliaries and additives, which may for example be cobinders, desiccants, fillers, cosolvents, color or effect pigments, thickeners, matting agents, light stabilizers, coatings additives such as dispersants, thickeners, defoamers and other auxiliaries such as adhesives, fungicides, bactericides, stabilizers or inhibitors and catalysts or emulsifiers which are known to those skilled in the art.

The inventive polyisocyanate composition is also suitable for one-component systems in which with essentially all free isocyanate groups having been deactivated with one or more blocking agents. The deactivated isocyanate groups

or the blocked polyisocyanate composition can be produced, for example, by allowing the polyisocyanate composition to react with the blocker agent. Examples of blocking agents include blocking agents of oxime, phenol, alcohol, imine, amine, carbamic acid, urea, imidazole, imide, mercaptan, active methylene, acid amide (lactam) and bisulfites.

Each of the inventive two-component and one-component system can be used as solvent-borne or water-borne system. In this regard, typical solvents selected from the above-mentioned examples or water can be used.

The invention further relates to a shaped body or coating obtainable or produced, preferably directly produced, by curing the inventive two-component system or the inventive one-component system, optionally under the action of heat and/or in the presence of a catalyst.

The invention further relates to a composite component comprising a material that is joined at least to the inventive shaped body or a coating at least in part.

The comparative examples and examples which follow are intended to further illustrate the invention but without limiting it.

Examples:

All percentages, unless noted otherwise, are to be understood to mean percent by weight.

All reactions were conducted under a nitrogen atmosphere in glass apparatuses dried beforehand under reduced pressure at 150-200 °C.

Mol% data or the simple existence of the isocyanurate, iminooxadiazinedione, allophanate, urethane, urea, uretdione, oxadiazinetrione, carbodiimide, thiourethane, thioallophanate and/or biuret structure present in the polyisocyanates were determined by $^{13}C$ NMR spectroscopy and always relate, unless noted otherwise, to the sum total of the NCO conversion products. The measurements were conducted on the Bruker DPX 400 or DRX 700 instruments on approx. 50% ($^{13}C$ NMR) samples in dry $C_6D_6$, unless noted otherwise, at 100 or 176 MHz ($^{13}C$ NMR). The $C_6D_5H$ present in the NMR solvent was used as reference signal (7.15 ppm, $^1H$-NMR), or the solvent signal itself (average signal of the 1:1:1 triplet at 128.0 ppm in the $^{13}C$ NMR.

Dynamic viscosities were determined at 23 °C using the MCR 501 rheometer (from Anton Paar) in accordance with DIN EN ISO 3219:1994-10. Measurement at different shear rates ensured that Newtonian flow behavior can be assumed. Details regarding the shear rate can therefore be omitted.

The NCO content was determined by titration in accordance with DIN EN ISO 10283:2007-11.

The residual monomer content was determined by gas chromatography in accordance with DIN EN ISO 10283:2007-11 with internal standard.

Size exclusion chromatography (SEC) was performed in accordance with DIN 55672-1:2016-03 with tetrahydrofuran as eluent.

The Hazen color number was measured by spectrophotometry in accordance with DIN EN ISO 6271-2:2005-03 using a LICO 400 spectrophotometer from Lange, Germany.

**Starting materials used**

| | |
|---|---|
| Setalux D A 870 BA | The acrylic polyol was obtained from Allnex GmbH (Deutschland). It has an OH number of 4.2 % (calculated on non-volatiles) and is supplied in butyl acetate. It has an equivalent weight of 575 g/eq. |
| Bayhydrol A 2695 | Aqueous hydroxyfunctional polyacrylic dispersion, Covestro Deutschland AG |
| Byk 141 | Silicone defoamer from Byk Additives and Instruments GmbH, Deutschland |
| Byk 331 | Silicone surface additive from Byk Additives and Instruments GmbH, Deutschland |
| Byk 349 | Silicone surfactant for aqueous coatings, from Byk Additives and Instruments GmbH, Deutschland |
| Addocat 201 | Dibutyltin dilaurate from Lanxess Deutschland GmbH |
| Tinuvin 292 | Hindered amine light stabilizer, BASF SE, Deutschland |
| Tinuvin 1130 | Hydroxyphenyl benzotriazole liquid UV absorber, BASF SE, Deutschland |
| MPA | 1-methoxypropyl-2-acetate, anhydrous, was obtained from Azelis, St. Augustin |
| Xylene | Obtained from Azelis, St. Augustin |
| Butyl acetate | Obtained from Azelis, St. Augustin |

Polyisocyanate 1

An isocyanurate structures containing 2,5-bis(isocyanatomethyl) tetrahydrofurane (TEFUDI) polyisocyanate was prepared by placing 786.40 g (4.32 mol) of freshly degassed TEFUDI under nitrogen into a three-necked round bottom flask equipped with a nitrogen inlet, thermometer, septum and a magnetic stir bar. The reaction vessel was heated to 60°C. Subsequently, a 24% catalyst solution of 5-azaspiro[4.5]decan-5-ium fluoride hydrofluoride in iPrOH was added dropwise in portions under stirring, resulting in a slightly exothermic reaction. The reaction mixture was stirred until a NCO content of 38.7% was reached and the reaction was stopped by adding an amount equivalent to the amount of catalyst of a 40% strength solution of dodecylbenzenesulfonic acid in isopropanol. The mixture was then worked up by means of thin-film-distillation (0.17 mbar, 160 °C) and the viscous resin obtained was diluted with butyl acetate (BA). The product had the following characteristics and composition:

| | |
|---|---|
| NCO value: | 14.4% |
| monomeric TEFUDI: | 0.02% |
| Viscosity (23 °C): | 530 mPas |
| Solid content: | 80% |

Polyisocyanate 2

An isocyanurate structures containing 2,5-bis(isocyanatomethyl) tetrahydrofurane (TEFUDI) polyisocyanates was prepared by placing 786.40 g (4.32 mol) of freshly degassed TEFUDI under nitrogen into a three-necked round bottom flask equipped with a nitrogen inlet, thermometer, septum and a magnetic stir bar. The reaction vessel was heated to 60°C. Subsequently, a 24% catalyst solution of 5-azaspiro[4.5]decan-5-ium fluoride hydrofluoride in iPrOH was added dropwise in portions under stirring, resulting in a slightly exothermic reaction. The reaction mixture was stirred until a NCO content of 38.7% was reached and the reaction was stopped by adding an amount equivalent to the amount of catalyst of a 40% strength solution of dodecylbenzenesulfonic acid in isopropanol. The mixture was then worked up by means of thin-film-distillation (0.17 mbar, 160 °C) and the viscous resin obtained was diluted with methoxypropyl acetate. The product had the following characteristics and composition:

| | |
|---|---|
| NCO content: | 14.4% |
| monomeric TEFUDI: | 0.02% |
| Viscosity (23 °C): | 530 mPas |
| Solid content: | 80% |

Polyisocyanate 3:

An isocyanurate structures containing hexamethylene diisocyanate (HDI) polyisocyanate was prepared by catalytic trimerization of HDI in accordance with Example 11 of EP-A 330 966, with the modification that the reaction was stopped at an NCO content of the crude mixture of 40% by addition of dibutyl phosphate. Unreacted HDI was then separated off by thin-film distillation at a temperature of 130° C and a pressure of 0.2 mbar. The product had the following characteristics and composition:

| | |
|---|---|
| NCO content: | 21.7% |
| Monomeric HDI: | 0.1% |
| Viscosity (23 °C) | 3080 mPas |
| Solid content: | 100% |

Polyisocyanate 4:

An isocyanurate structures containing pentamethylene diisocyanate (PDI) polyisocyanate was prepared by catalytic trimerization of PDI by the process described in WO 2016/146579 for polyisocyanate component A2). The reaction was deactivated at an NCO content of the crude mixture of 36.7% by adding an equimolar amount of dibutyl phosphate, based on the amount of catalyst used, and stirring at 80 °C for 30 minutes. Unreacted PDI was then separated off by thin-film distillation at a temperature of 140 °C and a pressure of 0.5 mbar. The product had the following

characteristics and composition:

| | |
|---|---|
| NCO content: | 21.8% |
| monomeric PDI: | 0.09% |
| Viscosity (23 °C): | 9850 mPas |
| Solid content: | 100% |

Polyisocyanate 5:

An isophorone diisocyanate (IPDI) polyisocyanate containing isocyanurate structures was prepared through catalytic trimerization of IPDI in accordance with Example 2 of EP-A-0 003 765. The reaction was deactivated at an NCO content of the crude mixture of 30.1% by addition of an equimolar amount of dibutyl phosphate, based on the amount of catalyst used, and stirring at 80 °C for 30 minutes. Unreacted IPDI was then separated off by thin-film distillation at a temperature of 170 °C and a pressure of 0.3 mbar, and the solid resin obtained was diluted with butyl acetate (BA). The product had the following characteristics and composition:

| | |
|---|---|
| NCO content: | 11.9% |
| monomeric IPDI: | 0.28% |
| Viscosity (23 °C) | 620 mPas |
| Solid content: | 70% |

Polyisocyanate 6:

An iminooxadiazindione structures containing hexamethylene diisocyanate (HDI) was prepared in accordance with Comparative Example 2a of WO 2018/153801 by trimerization of hexamethylene diisocyanate (HDI) using a 20% solution of 5-azaspiro[4.5]decan-5-ium fluoride hydrofluoride in 2-ethylhexanol as catalyst, reaction stopping at an NCO content of the crude mixture of 44.8% by addition of an amount equivalent to the amount of catalyst of a 70% strength solution of dodecylbenzenesulfonic acid in isopropanol and subsequent separation of the unreacted HDI by thin-film distillation at a temperature of 130 °C and a pressure of 0.2 mbar. The product had the following characteristics and composition:

| | |
|---|---|
| NCO content: | 23.5% |
| monomeric HDI: | 0.11% |
| Viscosity (23 °C) | 720 mPas |
| Solid content: | 100% |

**Characterization of application coating films**

Drying time T1, T3 and T4 were carried out according to DIN EN ISO 9117-5:2010-07.

The pendulum damping according to König was determined to DIN EN ISO 1522 DIN EN ISO 1522:2007-04 on glass plates.

Solvent resistance was tested according to DIN EN ISO 4628-1:2016-07 small amounts of each of the solvents xylene, 1-methoxypropyl-2-acetate, ethyl acetate and acetone were placed in test tubes and provided with a cottonwool pad at the opening, thus forming a solvent-saturated atmosphere within the test tubes. The test tubes were subsequently brought with the cotton pad onto the surface of the coating, where they remained for 5 minutes. After the solvent had been wiped off, the film was examined for destruction/softening/loss of adhesion and rated (0=no change, 5=film completely dissolved). The evaluations reported are those for the four solvents in the order in each case of xylene (X), 1-methoxypropyl-2-acetate (MPA), ethyl acetate (EA) and acetone (A) in the form of four successive digits.

To test the coatings towards resistance towards water a cotton pad was immersed in water and then placed on top of a coating which was then covered with a small glass vial. The solution remained on the coatings for 24 h. After this time, fresh water was used to remove the water from the coatings. The panel was then dried with paper and then the panels were examined and noted as having "bubbles" or "no bubbles".

Condensation test DIN EN ISO 6270-2 CH:2018-04

CAM 180 Rapid weathering studies in the presence of UV radiation were performed in accordance with SAE J2527. The

test plates were examined every 250 h.

The UV-A tests of the coating materials were performed according to DIN EN ISO 16474- 3:2014-03 (cycle 1). The test plates were checked every 250 h.

Delta E (Yellowing, CAM 180) The delta E value can be calculated from the L, a and b values determined according to the color space Lab according to DIN EN ISO/CIE 11664-4:2019-04 using "Dr. Lange - Micro Color II".

**Formulations**

**Solvent borne coatings**

*Formulation Example 1*

Component A: Setalux DA 870 BA (48.11 g) was mixed with 0.25 g Byk 141 (delivered form), 1.50 g Byk 331 (10 % solution in butyl acetate (BA)), 1.50 g Addocat 201 (1% solution in BA), 1.00 g Tinuvin 292 (50 % solution in BA), and 2.00 g Tinuvin 1130 (50 % solution in BA). The mixture was diluted with 20.64 g solution of MPA:Xylene:BA 1:1:1.

Component B: 24.43 g of Polyisocyanate 1 was diluted with 10.00 g of a solution of BA and xylene 1:1.

Component A and B were poured into a container in an NCO to OH ratio of 1:1 and mixed by hand for 1 minute. The formulations were applied on panels depending on the test to be carried out, with a coating knife. The panels were dried at room temperature, or 30 minutes at 60 °C, or 30 minutes at 80 °C, or 30 minutes at 140 °C. The dry film thickness after curing was approximately 50 μm.

*Formulation Example 1 containing a) reduced catalyst and b) without catalyst*

The coating was prepared as described in the previous example with half the amount of catalyst (Example 1a, 0.75 g Addokat 201) and without the catalyst (Example 1b, no Addokat 201).

Table 1: *Overview of Examples (Examples 2-5 are comparative examples)*

| **Component B** | Solid content | Example 1 | Example 2 | Example 3 | Example 4 | Example 5 |
|---|---|---|---|---|---|---|
| Polyisocyanate 1 | 80% BA | 24,43 | | | | |
| Polyisocyanate 3 | 100% | | 16,15 | | | 18,64 |
| Polyisocyanate 4 | 100% | | | 16,22 | | |
| Polyisocyanate 5 | 70% BA | | | | 30,12 | 6,21 |
| BA:Xylol ( 1:1 ) | | 10,00 | 8,85 | 8,78 | 10,00 | 3,00 |

The formulations were prepared as previously described with the amounts of hardener and solvent in Component B as outlined in the table above.

**Water borne coatings**

*Formulation Example 6 (starting formulation without additives)*

Component A: Bayhydrol A 2695 (58.51 g) was combined with Byk 349 (0.13 g) and water (9.00 g). The mixture was stirred with the dissolver Dispermat CV50 for 2 minutes at 2000 U/min.

Component B: Polyisocyanate 2 was dissolved further in MPA (3.96 g) and stirred with the dissolver Dispermat CV50 for 2 minutes at 2000 U/min.

Component A and B were mixed together to give a ratio of NCO to OH of 1.5:1 and mixed with the dissolver Dispermat CV50 for 2 minutes at 2000 U/min. The formulations were applied on panels with a coating knife. The wet film thickness was approximately 150 μm. The panels were dried for 7 days at room temperature or for 30 minutes at 60 °C.

*Comparison Example 7*

Alternative Component B: Polyisocyanate 6 (19.14 g) was dissolved in MPA (10.30 g). The formulation was prepared as described above.

Table 2: *Application results solvent borne coatings*

| | Example (Ex.) 1 | Ex. 1a | Ex. 1b | Ex. 2 | Ex. 3 | Ex. 4 | Ex. 5 |
|---|---|---|---|---|---|---|---|
| Drying **Behaviour (min)** | | | | | | | |
| RTT1 | 40 | 40 | 40 | 65 | 60 | 30 | 50 |
| RT T4 | 480 | > 8h | > 8h | > 8h | > 8h | 450 | >8h |
| 30, 60 °C T4 | direct | direct | direct | 180 | 110 | direct | direct |
| **Hardness (sec)** | | | | | | | |
| RT 7d | 144 | 157 | 155 | 151 | 152 | 165 | 153 |
| 30, 60 °C 7d | 171 | 182 | 176 | 185 | 191 | 181 | 164 |
| **Solvent resistance: (Xy/MPA/EA/Ac)** | | | | | | | |
| RT | 2145 | 2145 | 2145 | 2145 | 2134 | 5555 | 2135 |
| 30, 60 °C 7d | 3124 | 3224 | 3134 | 3124 | 2114 | 5555 | 2235 |
| **Water resistance** | | | | | | | |
| RT | no bubbles | no bubbles | no bubbles | bubbles | bubbles | no bubbles | bubbles |
| 30, 60 °C 7d | no bubbles | no bubbles | no bubbles | bubbles | bubbles | no bubbles | bubbles |

Table 3: *Continued application results solvent borne coatings*

| | Example (Ex.) 1 | Ex. 2 | Ex. 3 | Ex. 4 |
|---|---|---|---|---|
| **Condensation test (after 10 days)** | | | | |
| | No change | No change | No change | No change |
| **CAM 180 (after 0 h / 2500 h)** | | | | |
| 20° | 95 / 90 | 94 / 94 | 94 / 94 | 93 / 66 |
| 60° | 95 / 94 | 95 / 95 | 95 / 95 | 94/83 |
| **UV-A (after 0 h / 2500 h)** | | | | |
| | 96 / 92 | 95 / 94 | 95 / 94 | 93 / 92 |
| | 97 / 96 | 97 / 97 | 97 / 97 | 96 / 95 |
| **Yellowing CAM 180** | | | | |
| (after 250 h / 2500 h) | 0.4 / 0.9 | 0.4 / 1.4 | 0.3 / 1.2 | 0.5 / 1.6 |

Table 4: *Application results water borne coatings*

| | Example 6 (inventive) | Example 7 (comparative) |
|---|---|---|
| **Drying Behaviour (min)** | | |
| 30, 60 °C T4 | direct | 10 min |
| **Hardness (sec)** | | |
| 30, 60 °C 7d | 178 | 199 |
| **Solvent resistance: Xy/MPA/EA/Ac** | | |
| 30, 60 °C 7d | 0002 | 1111 |

## Discussion of the results

As shown by Example 1 the Polyisocyanate 1 produces solvent borne films that show the advantage of the combined effects seen with HDI and IPDI trimers (comparative Example 5). These coatings are fast drying (after room temperature curing it has achieved T4 at 8 h), are sufficiently hard 7 days after curing (pendulum hardness > 140 s) and show reasonable solvent resistance. The water resistance testing does not lead to bubble formation as seen with HDI and IPDI trimers. After weathering (CAM 180 and UV-A) the new system has no significant loss in gloss and yellowing, indicating it is weather stable. Furthermore, this result can also be obtained with lower catalyst loadings or even without any catalyst, as shown in inventive Examples 1a and 1b. Example 6 (Polyisocyanate 2) shows that the inventive polyisocyanates composition can also be used in water borne systems. In comparison to a standard system with Polyisocyanate 6 (comparative Example 7) these systems have comparable hardness with improved chemical resistance and the added advantage of faster drying also in water borne systems.

## Claims

1. A polyisocyanate composition comprising at least one bridging cis-tetrahydrofuran-2,5-diyl-dimethylene unit and at least one isocyanurate, iminooxadiazinedione, allophanate, urethane, urea, uretdione, oxadiazinetrione, carbodiimide, thiourethane, thioallophanate and/or biuret structure
and/or comprising at least one bridging trans-tetrahydrofuran-2,5-diyl)-dimethylene unit and at least one isocyanurate, iminooxadiazinedione, allophanate, urethane, urea, uretdione, oxadiazinetrione, carbodiimide, thiourethane, thioallophanate and/or biuret structure.

2. The polyisocyanate composition according to claim 1, **characterized in that** it comprises at least one isocyanurate, iminooxadiazinedione, allophanate, uretdione and/or biuret structure, preferably at least one isocyanurate, iminooxadiazinedione, allophanate, and/or uretdione structure, more preferably at least one isocyanurate, iminooxadiazinedione and/or allophanate structure.

3. The polyisocyanate composition according to claim 1 or 2, **characterized in that** it has an NCO content determined in accordance with DIN EN ISO 11909:2007-05 of from 5.8 to 25.9% by weight, preferably from 7.8 to 24.9% by weight, particularly preferably from 9.7 to 23.9% by weight, based on the total weight of the polyisocyanate composition.

4. The polyisocyanate composition according to any one of claims 1 to 3, **characterized in that** it has a residual monomeric 2,5-bis(isocyanatomethyl) tetrahydrofurane content of less than 1 % by weight, preferably less than 0.5 % by weight and more preferably less than 0.1 % by weight, based on the total weight of the polyisocyanate composition.

5. A process for preparing a polyisocyanate composition according to any of claims 1 to 4, comprising the reaction of at least one cis-2,5-bis(isocyanatomethyl) tetrahydrofurane and/or trans-2,5-bis(isocyanatomethyl) tetrahydrofurane, optionally in the presence of further coreactants selected from the group of alcohols, thiols, amines, water, CO2, or else further isocyanates having an NCO functionality > 1.

6. A polyisocyanate, obtained or obtainable, preferably directly obtained, according to a process according to claim 5.

7. A use of at least one polyisocyanate composition according to any of claims 1 to 4 and/or at least one polyisocyanate composition obtained or obtainable, preferably directly obtained according to a process according to claim 5 and/or at least one polyisocyanate according to claim 6 for reducing catalyst amounts in the curing with at least one NCO-reactive compound and/or for allowing curing with at least one NCO-reactive compound at temperatures below 100 °C, preferably below 80 °C.

8. A use of at least one polyisocyanate composition according to any of claims 1 to 4 and/or at least one polyisocyanate composition obtained or obtainable, preferably directly obtained according to a process according to claim 5 and/or at least one polyisocyanate according to claim 6 for producing a coating on a substrate, an adhesive or a sealant.

9. A two-component system containing a component A), comprising at least one polyisocyanate composition according to any of claims 1 to 4 and/or at least one polyisocyanate composition obtained or obtainable according to a process according to claim 5 and/or at least one polyisocyanate according to claim 6, and a component B), comprising at least one NCO-reactive compound.

**10.** The two-component system as claimed in claim 9, wherein the at least one NCO-reactive compound is a polyhydroxy compound, preferably a polyether polyol, polyester polyol, polycarbonate polyol and/or polyacrylate polyol.

**11.** A shaped body or coating obtainable or produced by curing a two-component system as claimed in claim 9 or 10, optionally under the action of heat and/or in the presence of a catalyst.

**12.** A composite component comprising a material that is joined at least to a shaped body or a coating as claimed in claim 11 at least in part.

Europäisches Patentamt
European Patent Office
Office européen des brevets

# EUROPEAN SEARCH REPORT

Application Number
EP 23 18 0300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/200636 A1 (ARCHER DANIELS MIDLAND CO [US]) 18 December 2014 (2014-12-18)<br>* schemes 4-5, 8, 10;<br>page 7, line 2 - line 9; claims 13-15 *<br>* page 15 - page 16; examples 1-4 *<br>* page 14; example 2 *<br>----- | 1,2,7-12 | INV.<br>C08G18/24<br>C08G18/62<br>C08G18/75<br>C08G18/77<br>C08G18/79<br>C08L75/14<br>C08L75/16<br>C09D175/14<br>C09D175/16 |
| X | GB 943 623 A (SHELL RES LTD)<br>4 December 1963 (1963-12-04)<br>* page 3, line 50 - line 55; claims 9,12 *<br>* page 2, lines 97-98,127-128 *<br>----- | 1,2,7-12 | |
| X | GB 936 370 A (MERCK & CO INC)<br>11 September 1963 (1963-09-11)<br>* page 1, line 5 - line 23; claims 1-11 *<br>----- | 1-12 | |
| X | US 2022/010053 A1 (HECKING ANDREAS [DE] ET AL) 13 January 2022 (2022-01-13)<br>* page 2, paragraphs 0001,0025 *<br>----- | 1-12 | |
| | | | TECHNICAL FIELDS SEARCHED (IPC)<br>C08G<br>C08L<br>C09D |

The present search report has been drawn up for all claims

| Place of search | Date of completion of the search | Examiner |
|---|---|---|
| Munich | 8 November 2023 | Scheuer, Sylvie |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 18 0300

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2023

| Patent document cited in search report | Publication date | Patent family member(s) | Publication date |
|---|---|---|---|
| WO 2014200636 A1 | 18-12-2014 | AU 2014278693 A1 | 29-10-2015 |
| | | AU 2014278694 A1 | 29-10-2015 |
| | | BR 112015028740 A2 | 25-07-2017 |
| | | BR 112015029004 A2 | 25-07-2017 |
| | | CA 2908859 A1 | 18-12-2014 |
| | | CA 2909059 A1 | 18-12-2014 |
| | | CN 105228998 A | 06-01-2016 |
| | | CN 105263938 A | 20-01-2016 |
| | | EP 3008058 A1 | 20-04-2016 |
| | | EP 3008072 A1 | 20-04-2016 |
| | | JP 2016523239 A | 08-08-2016 |
| | | JP 2016523240 A | 08-08-2016 |
| | | KR 20160018679 A | 17-02-2016 |
| | | KR 20160018697 A | 17-02-2016 |
| | | US 2016031842 A1 | 04-02-2016 |
| | | US 2016083396 A1 | 24-03-2016 |
| | | US 2016326185 A1 | 10-11-2016 |
| | | US 2017029395 A1 | 02-02-2017 |
| | | WO 2014200636 A1 | 18-12-2014 |
| | | WO 2014200637 A1 | 18-12-2014 |
| GB 943623 A | 04-12-1963 | NONE | |
| GB 936370 A | 11-09-1963 | GB 936370 A | 11-09-1963 |
| | | US 3049552 A | 14-08-1962 |
| US 2022010053 A1 | 13-01-2022 | CN 113166361 A | 23-07-2021 |
| | | EP 3660066 A1 | 03-06-2020 |
| | | EP 3887423 A1 | 06-10-2021 |
| | | JP 2022508126 A | 19-01-2022 |
| | | KR 20210097115 A | 06-08-2021 |
| | | US 2022010053 A1 | 13-01-2022 |
| | | WO 2020109125 A1 | 04-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 1493360 B1
- DE 1900514 A1
- GB 936370 A
- WO 2011098272 A2
- WO 2021180709 A1
- WO 2020109125 A1
- EP 0764633 A2
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- EP 0962454 A
- EP 0962455 A
- EP 2785760 A
- EP 2883895 A
- EP 3107922 A
- EP 3107948 A
- EP 3337836 A
- EP 330966 A
- WO 2016146579 A
- EP 0003765 A
- WO 2018153801 A

### Non-patent literature cited in the description

- **H. J. LAAS** ; **R. HALPAAP** ; **J. PEDAIN**. *J. prakt. Chem.*, 1994, vol. 336, 185-200
- **W. SIEFKEN**. *Liebigs Ann. Chem.*, 1949, vol. 562, 122
- *J. Prakt. Chem.*, 1994, vol. 336, 185-200